# EUROPEAN PATENT APPLICATION

(11) **EP 3 428 234 A1**
(43) Date of publication of application: **16.01.2019**
(21) Application number: 17763484.7
(22) Date of filing: 17.02.2017
(51) Int. Cl.: C08L 81/02, C08L 71/12, C08K 7/20, C08K 3/22, C08K 7/14, C08K 3/14, F21V 7/22

(54) **RESIN COMPOSITION FOR LAMP REFLECTOR HAVING EXCELLENT SURFACE SMOOTHNESS AND METAL DEPOSITION**

(30) Priority: 09.03.2016 KR 20160028259
(71) Applicant: Initz Co., Ltd., Nam-gu, Ulsan 44784 (KR)
(72) Inventor: AHN, Byung-woo, Incheon 21910 (KR); SHIN, Jong-Wook, Suwon-si Gyeonggi-do 16316 (KR); JUNG, Myung-wook, Seoul 05783 (KR); HWANG, Hee-yeok, Seoul 05831 (KR); OH, Hyeoung-geun, Suwon-si Gyeonggi-do 16435 (KR); KIM, Hae-ri, Seongnam-si Gyeonggi-do 13504 (KR)
(74) Representative: dompatent von Kreisler Selting Werner - Partnerschaft von Patent- und Rechtsanwälten mbB
(86) International application number: PCT/KR2017/001761
(87) International publication number: WO 2017/155221

(57) **Abstract**

The present invention relates to a resin composition for a lamp reflector comprising a polyarylene sulfide; a phenoxy resin; a filler; and hydrotalcite, wherein the polyarylene sulfide has a substituent of a carboxy group, an amine group or a hydroxyl group at an end of the main chain thereof. Since the resin composition of the present invention has low surface smoothness and high metal deposition properties while maintaining excellent mechanical and thermal properties inherent to polyarylene sulfide, the resin composition is useful as a resin for a lamp reflector.

## Description

### Technical Field

The present invention relates to a resin composition for a lamp reflector showing good surface roughness and metal deposition.

### Background Art

Currently, a demand for a polyarylene sulfide (PAS), a representative engineering plastic, has increased for applications in a variety of electronic goods and products used in high temperatures and corrosive environments due to its high thermal resistance, chemical resistance, flame resistance, and electric insulation.

Polyphenylene sulfide (PPS) is the only polyarylene sulfide commercially available. PPS is widely used for housing or major parts of automobile equipment and electric or electronic devices due to its excellent mechanical, electrical and thermal properties, and chemical resistance. But, when used alone, since a polyphenylene sulfide resin has insufficient heat resistance and mechanical strength, the polyphenylene sulfide resin is often mixed with a filler in order to enhance heat resistance and mechanical strength.

For example, Korean Patent No. 10-1280100 discloses a polyarylene sulfide resin composition including a polyarylene sulfide having a low chloride content, a liquid crystal polyester amide resin, and a glass fiber having a low nitrogen content and showing effects of less generation of burr and high heat resistance as molded with high fluidity.

Meanwhile, since a metal such as magnesium, aluminum or the like is mainly used as a material for an automotive lamp reflector and a lamp reflector made of a metal has a limitation in design and a low productivity in a die casting process, the price of such a reflector is high despite the fact that the cost for the materials is inexpensive. Also, in view of the trend for lightweight automobiles, metal parts are being rapidly replaced by plastic parts, but the weight of a lamp module is rather increasing due to the multifunctionality of the automotive lamp module. Accordingly, reduction of weight in the automotive lamp module is desperately needed.

A lamp reflector is required to be usable in a high temperature environment of about 230°C and to have a low moisture absorption rate. Also, the lamp reflector is required to have a good haze property at a high temperature. Further, the production of the lamp reflector generally includes a process of applying and curing a primer composition to form a primer layer on a molded article (base material) obtained by molding a resin molding material, and coating a metal such as aluminum, zinc or the like on the primer layer to form a metal reflection layer. Accordingly, the base material for the lamp reflector is required to have low surface roughness and high metal deposition.

### Disclosure of Invention

### Technical Problem

An object of the present invention is to provide a resin composition for a lamp reflector showing good surface roughness and metal deposition.

Another object of the present invention is to provide a lamp reflector having good surface roughness and metal deposition produced by using the resin composition.

### Solution to Problem

The present invention provides a resin composition for a lamp reflector including a polyarylene sulfide; a phenoxy resin including repeating units represented by Formula 1; glass beads; a filler; and a hydrotalcite, wherein the polyarylene sulfide has a substituent group selected from carboxyl group, amine group, hydroxyl group and any combination thereof at an end of the main chain:

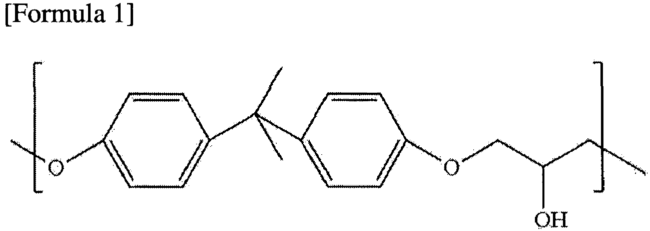

The present invention also provides a lamp reflector manufactured by molding the resin composition.

### Advantageous Effects of Invention

Since the resin composition according to the present invention has low surface roughness and high metal deposition while maintaining good mechanical and thermal properties inherent in PAS, the resin composition is useful as a resin for a lamp reflector. Also, the resin composition according to the present invention is applicable to LED lighting and various electric and electronic products that are application fields of the lamp reflector and may be widely used in various fields requiring high metal adhesion.

### Best Mode for Carrying out the Invention

The present invention provides a resin composition for a lamp reflector comprising a polyarylene sulfide; a phenoxy resin including repeating units represented by Formula 1; glass beads; a filler; and a hydrotalcite, wherein the polyarylene sulfide has a substituent group selected from carboxyl group, amine group, hydroxyl group and any combination thereof at an end of the main chain:

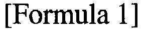

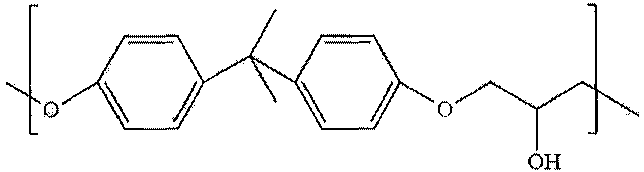

The phenoxy resin enhances metal deposition of the resin composition and contains repeating units represented by Formula 1. Specifically, the phenoxy resin may have a weight average molecular weight of 30,000 to 70,000. More specifically, the phenoxy resin may have a weight average molecular weight of 50,000 to 70,000.

The phenoxy resin may be included in an amount of 0.5 to 10% by weight, based on the total weight of the resin composition. Specifically, the phenoxy resin may be included in an amount of 1 to 5% by weight, based on the total weight of the resin composition.

The hydrotalcite plays a role in reducing haze of the resin composition. Specifically, the hydrotalcite may comprise MgO and Al₂O₃ in a weight ratio of 3.0 to 5.0:1 and have an average particle diameter of 0.3 to 0.8 µm. More specifically, the hydrotalcite may comprise MgO and Al₂O₃ in a weight ratio of 3.5 to 4.5:1 and have an average particle diameter of 0.3 to 0.6 µm.

The hydrotalcite may be included in an amount of 0.05 to 2% by weight based on the total weight of the resin composition. Specifically, the hydrotalcite may be included in an amount of 0.1 to 1.5% by weight based on the total weight of the resin composition.

The glass beads play a role in enhancing the surface roughness of the resin composition and reducing the moisture absorption rate. Glass beads which are surface-treated can be used in order to enhance the interfacial adhesion force with a resin. Specifically, the glass beads may have an average particle diameter of 3 to 50 µm. In addition, the surface treating of the glass beads may be carried out with a material selected from silane, maleic acid anhydrate, titanate, zirconate, fumaric acid, and any combination thereof. Specifically, the glass beads may be glass beads surface-treated with silane. Also, the glass beads may be included in an amount of 0.5 to 15% by weight, based on the total weight of the resin composition. Specifically, the glass beads may be included in an amount of 1 to 10% by weight, based on the total weight of the resin composition.

The resin composition according to the present invention includes a polyarylene sulfide.

The polyarylene sulfide has a carboxyl, amine or hydroxyl substituent at ends of the main chain thereof. The substituent allows the polyarylene sulfide to have good compatibility with other polymer materials or fillers, while retaining good physical properties inherent in the polyarylene sulfide.

The polyarylene sulfide may have a number average molecular weight of 5,000 to 50,000, specifically 8,000 to 40,000, more specifically 10,000 to 30,000. Also, the polyarylene sulfide may have a polydispersity, defined as a ratio of weight average molecular weight to number average molecular weight, of 2.0 to 4.5, specifically 2.0 to 4.0, more specifically 2.0 to 3.5.

The polyarylene sulfide may have a melt viscosity, as measured by a rotational disk-type viscometer at 300°C, of 100 to 50,000 poises, specifically 100 to 20,000 poises, more specifically 300 to 10,000 poises.

The polyarylene sulfide is not specifically limited as long as it satisfies the properties discussed above. For instance, the polyarylene sulfide may be produced by solution polymerization. Further, the polyarylene sulfide satisfying the above-described physical properties may enhance the surface roughness and metal deposition of the resin composition.

Specifically, the polyarylene sulfide may be prepared by a method comprising the steps of polymerizing a sulfur-containing reactant with a diiodo aromatic compound; and adding an aromatic compound having a carboxyl, amine or hydroxyl group during the polymerizing step.

For example, the diiodo aromatic compound may be at least one selected from the group consisting of diiodobenzene (DIB), diiodonaphthalene, diiodobiphenyl, diiodobisphenol, and diiodobenzophenone, but not limited thereto. Also, the diiodo aromatic compound may comprise a substituent such as an alkyl group or a sulfone group. Also, the diiodo aromatic compound in which an oxygen or nitrogen atom is contained in the aromatic group may be used. Further, the diiodo aromatic compound has various isomers according to positions to which an iodine atom is attached, and among these isomers, a compound such as para-diiodobenzene (pDIB), 2,6-diiodonaphtalene, or p,p'-diiodobiphenyl in which an iodine atom is attached to the para position may be suitably used.

The form of a sulfur element reacting with the diiodo aromatic compound is not particularly limited. The sulfur element generally exists in the form of a cyclooctasulfur (Ss) in which 8 atoms are linked at room temperature. Although not having such a form, commercially available sulfurs in a solid or liquid form may be used without particular limitation.

Also, the reactant may further comprise a polymerization initiator, a stabilizer, or a mixture thereof. Specifically, the polymerization initiator may be at least one selected from the group consisting of 1,3-diiodo-4-nitrobenzene, mercaptobenzothiazole, 2,2'-dithiobenzothiazole, cyclohexyl-benzothiazole sulfenamide, and butyl-benzothiazole sulfonamide, but not limited thereto. Also, the stabilizer may be used without particular limitation so long as it is a stabilizer commonly used in polymerization reactions of resins.

The polymerization reaction may be carried out under any conditions in which a polymerization reaction of a diiodo aromatic compound and a sulfur-containing reactant may be initiated. For example, the polymerization reaction may be carried out under temperature-rising and pressure-dropping reaction conditions, and specifically may be carried out for 1 to 30 hours while performing temperature rise and pressure drop from an initial reaction condition of 180-250 °C and 50-450 torr to a final reaction condition of 270-350 °C and 0.001-20 torr. More specifically, the polymerization reaction may be carried out under a final reaction condition of 280-300 °C and 0.1-0.5 torr.

The aromatic compound having the carboxyl, amine or hydroxyl group may be added when the progress of the polymerization reaction measured at a ratio of a present viscosity to a target viscosity is about 90% or higher, and specifically 90% or higher and less than 100% (e.g., at a late stage of polymerization reaction). The progress of the polymerization reaction may be measured as a ratio of the present viscosity to the target viscosity by setting a targeted molecular weight of polyarylene sulfide and a targeted viscosity of a polymerization product thereunder and measuring the present viscosity according to the degree of the polymerization reaction. In this regard, a method of measuring the present viscosity may be determined by a method obvious to those skilled in the art according to the scale of a reactor. For example, when polymerization is carried out in a relatively small polymerization reactor, a sample which is in the course of the polymerization reaction is taken from the reactor and the viscosity of the sample may be measured by a viscometer. On the other hand, when polymerization is carried out in a large continuous polymerization reactor, the present viscosity may be continuously and automatically measured in real time by a viscometer installed in the reactor itself.

Thus, by adding the aromatic compound having the carboxyl, amine or hydroxyl group at a late stage among the stages of polymerization reaction in which polymerization of the diiodo aromatic compound and the sulfur-containing reactant is carried out, it is possible to prepare a polyarylene sulfide in which the carboxyl, amine or hydroxyl group is introduced to at least part of the end groups of the main chain of the polyarylene sulfide. In particular, the polyarylene sulfide in which the carboxyl, amine or hydroxyl group is introduced to the end group of the main chain has advantages capable of maintaining good compatibility with other polymer materials or fillers and good physical properties inherent in the polyarylene sulfide.

The aromatic compound having the carboxyl, amine or hydroxyl group may be any monomer compound having the carboxyl, amine or hydroxyl group. Specifically, the aromatic compound having the carboxyl, amine or hydroxyl group may be 2-iodophenol, 3-iodophenol, 4-iodophenol, 2,2'-dithiodiphenol, 3,3'-dithiodiphenol, 4,4'-ddithiodiphenol, 2-iodobenzoic acid, 3-iodobenzoic acid, 4-iodobenzoic acid, 2,2'-dithiobenzoic acid, 2-iodoaniline, 3-iodoaniline, 4-iodoaniline, 2,2'-dithiodianiline, or 4,4'-dithiodianiline. In addition, various aromatic compounds having the carboxyl, amine or hydroxyl group may be used.

The aromatic compound having the carboxyl, amine or hydroxyl group may be added in an amount of 0.0001-10 parts by weight, specifically 0.001-7 parts by weight, more specifically, 0.01-2 parts by weight, based on 100 parts by weight of the diiodo aromatic compound. When the aromatic compound having the carboxyl, amine or hydroxyl group is added in an amount within the above-described range, the carboxyl, amine or hydroxyl group may be introduced to the end group of the main chain thereof.

Meanwhile, during the polymerization reaction, at a timing when polymerization is progressed to some extent, a polymerization stopping agent may be further added to the reactant. The polymerization stopping agent is not particularly limited so long as it can remove an iodine group included in a polymerized polymer so as to stop the polymerization. Specifically, the polymerization stopping agent may be at least one selected from the group consisting of diphenyl sulfide, diphenyl ether, diphenyl, benzophenone, dibenzothiazole disulfide, monoiodoaryl compound, benzothiazoles, benzothiazole sulfonamides, thiurams, dithiocarbamates, and diphenyl disulfide. More specifically, the polymerization stopping agent may be at least one selected from the group consisting of iodobiphenyl, iodophenol, iodoaniline, iodobenzophenone, 2-mercaptobenzothiazole, 2,2' -dithiobisbenzothiazole, N-cyclohexylbenzothiazole-2-sulfenamide, 2-morpholinothiobenzothiazole, N,N-dicyclohexylbenzothiazole-2-sulfenamide, tetramethylthiuram monosulfide, tetramethylthiuram disulfide, zinc dimethyldithiocarbamate, zinc diethyldithiocarbamate, and diphenyl disulfide.

The timing of adding the polymerization stopping agent may be determined in consideration of a targeted molecular weight of the polyarylene sulfide. For example, the polymerization stopping agent may be added at a timing when 70-100% by weight of a diiodo aromatic compound included in an initial reactant is consumed by the reaction.

According to an embodiment of the present invention, a method of preparing a polyarylene sulfide may, prior to the polymerization reaction, further include the step of melt-mixing the diiodo aromatic compound and the sulfur-containing reactant. The melt-mixing step may ease the subsequent polymerization reaction to be carried out.

The melt-mixing step is not particularly limited to a specific condition so long as the reactant can be melted and mixed. For example, the melt-mixing step may be carried out at a temperature of 130-200°C, specifically at 160-190°C.

According to an embodiment of the present invention, in the method of preparing polyarylene sulfide, the polymerization reaction may be carried out in the presence of a nitrobenzene-based catalyst. Also, when the melt-mixing step is further added prior to the polymerization reaction, the nitrobenzene-based catalyst may be added in the melt-mixing step. The nitrobenzene-based catalyst may include, but is not limited to, 1,3-diiodo-4-nitrobenzene or 1-iodo-4-nitrobenzene.

The polyarylene sulfide prepared as mentioned above may comprise iodine bonded to the main chain thereof and free iodine. Specifically, the content of iodine bonded to the main chain and the free iodine may be 10-10,000 ppm. The content of iodine bonded to the main chain and free iodine may be measured as described in the following Examples by heat-treating a polyarylene sulfide sample at a high temperature and then performing quantification using ion chromatography. The free iodine is generated in the polymerization step of the diiodo aromatic compound and the sulfur-containing reactant as mentioned above, and collectively encompasses iodine molecules, iodine ions, iodine radicals, etc. remaining in a state chemically separated from the polyarylene sulfide finally formed.

The polyarylene sulfide may be included in an amount of 20-60% by weight based on the total weight of the resin composition. Specifically, the polyarylene sulfide may be included in an amount of 25-45% by weight, based on the total weight of the resin composition.

The filler can be selected from calcium carbonate, glass fiber, glass flake, carbon fiber, wollastonite, whisker, milled glass, mica, barium sulfate, talc, silica, and any combination thereof. Specifically, the filler can be selected from calcium carbonate and glass fiber. More specifically, the filler may contain calcium carbonate and glass fiber.

The filler may be comprised in an amount of 40 to 70% by weight, specifically 40 to 65% by weight, based on the total weight of the resin composition.

The calcium carbonate enhances the surface roughness of the resin composition and specifically has an average particle diameter (D50) of 0.5-10 µm. For example, the calcium carbonate may be included in an amount of 10-50% by weight based on the total weight of the resin composition. Specifically, the calcium carbonate may be included in an amount of 20-40% by weight based on the total weight of the resin composition. More specifically, the calcium carbonate may comprise fine particulate calcium carbonate having an average particle diameter of 0.5-3.0 µm in an amount of 10-40% by weight and small particulate calcium carbonate having an average particle diameter of greater than 3.0 µm and up to 10 µm in an amount of 0-10% by weight, based on the total weight of the resin composition. When the resin composition comprises the small particulate calcium carbonate having an average particle diameter of greater than 3.0 µm and up to 10 µm in an amount exceeding 10% by weight, based on the total weight of the resin composition, mechanical properties of the resin composition may be lowered and reflectance after deposition of aluminum may be lowered due to a surface projection of the calcium carbonate.

Also, the calcium carbonate may be surface-treated calcium carbonate, surface non-treated calcium carbonate, or a mixture thereof. Specifically, the calcium carbonate may comprise surface-treated calcium carbonate and surface non-treated calcium carbonate in a weight ratio of 1:0.2-0.5. The surface treatment of the calcium carbonate is not particularly limited so long as a surface treatment method generally used for a filler of a resin is used. The surface treatment may increase dispersion of calcium carbonate in the resin and decrease agglomeration of calcium carbonate, and may be carried out by using, for example, a saturated fatty acid, an unsaturated fatty acid, a resin acid or salts thereof, an ester, an alcohol-based surfactant or the like. Examples of the saturated fatty acid may comprise stearic acid, capric acid, lauric acid, and myristic acid, and examples of the unsaturated fatty acid may comprise oleic acid and linoleic acid. Specifically, the surface treatment of the calcium carbonate may be a surface treatment in which the surface of the calcium carbonate is treated with stearic acid.

The glass fiber plays a role in enhancing heat resistance and mechanical strength of the resin composition, and a glass fiber whose surface is treated may be used so as to enhance the interfacial adhesion with a resin. Specifically, the glass fiber may have an average diameter of 6-15 µm and an average length of 2-5 mm. Also, the glass fiber may be alumino-borosilicate glass containing alkali oxide. In addition, the surface treatment of the glass fiber may be carried out with a material selected from silane, maleic anhydride, titanate, zirconate, fumaric acid and any combination thereof. Specifically, the glass fiber may be a glass fiber whose surface is treated with silane. Further, the glass fiber may be included in a content of 5-30% by weight, based on the total weight of the resin composition. Specifically, the glass fiber may be included in a content of 10-25% by weight, based on the total weight of the resin composition.

The resin composition may comprise 20-60% by weight of a polyarylene sulfide, 0.5-10% by weight of a phenoxy resin, 0.5-15% by weight of glass beads, 40-70% by weight of a filler, and 0.05-2.0% by weight of hydrotalcite.

Typical additives, such as a heat resistance stabilizer, a lubricant, an antistatic agent, a nucleating agent, a slip agent, a pigment or a combination thereof, may be further added to the resin composition in appropriate amounts as needed.

The resin composition is useful as a material for a lamp reflector because the resin composition has metal deposition enhanced by 5B or more as measured according to the ASTM D 3359 standard test after deposition of aluminum.

The resin composition for a lamp reflector containing the foregoing components according to the present invention may be prepared by a method well known in the art (for example, a method in which the components are blended and then kneaded by using a codirectional biaxial extruder or the like).

Meanwhile, the present invention provides a lamp reflector manufactured by molding the foregoing resin composition. The molding of the resin composition may be, for example, an extrusion molding, a transfer molding, an injection molding or the like, and specifically, the lamp reflector may be manufactured through the injection molding.

### Mode for the Invention

Hereinafter, the present invention is explained in detail by Examples. The following Examples are intended to further illustrate the present invention without limiting its scope.

### Example:

### Preparation Example 1: Preparation of PPS-1 resin

After completely melting and mixing a reactant including 5,130 g of p-diiodobenzene (p-DIB), 450 g of sulfur, and 4 g of 1,3-diiodo-4-nitrobenzene as a reaction initiator in a 5L reactor equipped with a thermocouple capable of measuring the inside temperature of the reactor and a vacuum line for nitrogen purging and vacuumizing by heating same to 180°C, a polymerization reaction was performed by carrying out temperature-rising and pressure-reducing step by step from the initial reaction condition of 220°C and 350 torr to the final reaction temperature of 300°C and the pressure of 0.6-0.9 torr for 4 hours while adding sulfur, seven times (19 g each). When the polymerization reaction proceeded 80% (the proceeding degree of the polymerization reaction was identified by the relative viscosity ratio [(present viscosity/target viscosity)], and the present viscosity was measured with a viscometer after taking a sample from the reactor where the polymerization reaction was progressing. Also, the target viscosity was set to 600 poise.), 35 g of diphenyl disulfide was added thereto as a polymerization inhibitor and the reaction was carried out for 1 hour. Subsequently, after adding 51 g of 4-iodobenzoic acid thereto when the reaction proceeded 90% and progressing the reaction under a nitrogen atmosphere for 10 minutes, the reaction was further performed with slowly vacuumizing to 0.5 torr or less for 2 hours, and terminated. By this, a polyarylene sulfide resin (hereinafter, referred to as 'PPS-1 resin') having a carboxyl group at the end of the main chain was synthesized. The PPS-1 resin obtained by the reaction was prepared into pellets by using a small strand cutter.

The PPS-1 resin was analyzed by FT-IR spectroscopy. By the analysis, it was confirmed that a carboxyl group peak exists at about 2400-3600 cm⁻¹ in the spectrum. It was also recognized that the relative height intensity of the peak at about 2400-3600 cm⁻¹ was about 3.4% when the height intensity of the ring stretch peak shown at about 1400-1600 cm⁻¹ was set as 100%.

Melting point (Tm), number average molecular weight (Mn), polydispersity index (PDI) and melt viscosity (MV) of the PPS-1 resin were measured by the following methods. As a result of the measurement, it was determined that Tm of the PPS-1 was 280°C, Mn was 15,420, PDI was 2.9, MV was 617 poises, and the content of iodine bonded to the main chain and free iodine was 300 ppm.

### Melt viscosity

Melt viscosity was measured at Tm+20°C by a rotating disk viscometer. In a frequency sweep method, the angular frequency was measured from 0.6 to 500 rad/s, and the viscosity at 1.0 rad/s was defined as melt viscosity.

### Melting point

Using a differential scanning calorimeter (DSC), the melting point was measured while the temperature was raised from 30 to 320°C at a speed of 10°C /minute, cooled to 30°C, and then raised from 30 to 320°C at a speed of 10°C /minute.

### Number average molecular weight (Mn) and Polydispersity index (PDI)

A sample was manufactured by dissolving the PPS resin in 1-chloronaphthalene at 250°C for 25 minutes with stirring so as to be 0.4% by weight solution. Subsequently, polyarylene sulfides having different molecular weights were sequentially separated in the column of a high temperature gel permeation chromatography (GPC) system (210°C) by flowing the sample at a flow rate of 1 mL/min, and the intensities corresponding to the molecular weights of the separated polyarylene sulfides were measured by using an RI detector. After making a calibration line with a standard specimen (polystyrene) of which the molecular weight was known, the relative number average molecular weight (Mn) and polydispersity index (PDI) of the sample were calculated.

### Contents of Iodine bonded to main chain and Free Iodine

Contents (ppm) of iodine bonded to the main chain and free iodine in each sample were measured by using a calibration curve analyzed in advance through ion chromatography and an automated quick furnace (AQF) in which iodine is ionized and then dissolved in distilled water after each sample is combusted at 1,000°C by using a furnace.

### Preparation Example 2: Preparation of PPS-2 resin

Except for using 4-iiodoanyline instead of 4-iiodobenzoic acid, a polyarylene sulfide was prepared by the same method as described in Preparation Example 1 and a polyarylene sulfide resin (hereinafter, referred to as 'PPS-2 resin') having an amine group at the end of the main chain was synthesized from the prepared polyarylene sulfide.

The PPS-2 resin was analyzed by FT-IR spectroscopy. By the analysis, it was confirmed that an amine group peak exists at about 3180-3350 cm⁻¹ in the spectrum. It was also recognized from the FT-IR spectrum that the relative height intensity of the peak at about 3180-3350 cm⁻¹ was about 1.4% when the height intensity of the ring stretch peak shown at about 1400-1600 cm⁻¹ was set as 100%.

Melting point (Tm), number average molecular weight (Mn), polydispersity index (PDI) and melt viscosity (MV) of the PPS-2 resin were measured by the same method as described in Preparation Example 1. As a result of the measurement, it was determined that Tm of the PPS-2 was 281°C, Mn was 16,340, PDI was 2.8, MV was 713 poises, and the content of iodine bonded to the main chain and free iodine was 250 ppm.

### Preparation Example 3: Preparation of PPS-3 resin

Except for using 4,4'-dithiodiphenol instead of 4-iiodobenzoic acid, a polyarylene sulfide was prepared by the same method as described in Preparation Example 1 and a polyarylene sulfide resin (hereinafter, referred to as 'PPS-3 resin') having a hydroxyl group at the end of the main chain was synthesized from the prepared polyarylene sulfide.

The PPS-3 resin was analyzed by FT-IR spectroscopy. By the analysis, it was confirmed that hydroxyl group peaks exist at about 3300-3400 cm⁻¹ and about 3600-3650 cm⁻¹ in the spectrum. It was also recognized from the FT-IR spectrum that the relative height intensity of the peak at about 3300-3400 cm⁻¹ and about 3600-3650 cm⁻¹ was about 0.58% when the height intensity of the ring stretch peak shown at about 1400-1600 cm⁻¹ was set as 100%.

Melting point (Tm), number average molecular weight (Mn), polydispersity index (PDI) and melt viscosity (MV) of the PPS-3 resin were measured by the same method as described in Preparation Example 1. As a result of the measurement, it was determined that Tm of the PPS-2 was 280°C, Mn was 15,890, PDI was 2.7, MV was 680 poises, and the content of iodine bonded to the main chain and free iodine was 200 ppm.

### Preparation Example 4: Preparation of PPS-4 resin

Except for adding 4-iiodobenzoic acid, a polyarylene sulfide was prepared by the same method as described in Preparation Example 1 and a polyarylene sulfide resin (hereinafter, referred to as 'PPS-4 resin') having an amine group at the end of the main chain was synthesized from the prepared polyarylene sulfide.

Melting point (Tm), number average molecular weight (Mn), polydispersity index (PDI) and melt viscosity (MV) of the PPS-4 resin were measured by the same method as described in Preparation Example 1. As a result of the measurement, it was recognized that Tm of the PPS-2 was 280°C, Mn was 16,420, PDI was 2.8, MV was 600 poises, and the content of iodine bonded to the main chain and free iodine was 200 ppm.

### Example 1: Preparation of PPS resin composition

36.5% by weight of PPS-1 of Preparation Example 1, 30% by weight of calcium carbonate-1, 10% by weight of glass beads-1, 20% by weight of glass fibers, 3% by weight of a phenoxy resin, and 0.5% by weight of hydrotalcite were mixed in a biaxial screw extruder to prepare a resin composition.

The biaxial screw extruder used in Example 1 was an extruder made by SM platek having the diameter of 40 mm and L/D=44. The process was carried out in conditions of screw 250 rpm, feed rate 60 kg/h, barrel temperature 280-300°C, and torque 60%. The raw materials were independently fed through three feeders, i.e., PPS-1 resin and phenoxy resin were fed through feeder 1, hydrotalcite was fed through feeder 2, and glass fibers, glass beads and calcium carbonate were fed through feeder 3 to prepare PPS resin compositions.

### Examples 2 to 7 and Comparative Examples 1 to 5: Preparation of PPS resin compositions

Except for using the components and contents described in Tables 2 and 3, PPS resin compositions were prepared by the same method as described in Example 1.

Properties and manufacturers of the components used in Examples 1 to 7 and Comparative Examples 1 to 5 are summarized and shown in Table 1.

**Table 1**

| Item | Property |
|---|---|
| PPS-1 | Prepared in Preparation Example 1 (MV: 617 poises), End group of the main chain: COOH |
| PPS-2 | Prepared in Preparation Example 2 (MV: 713 poises), End group of the main chain: NH₂ |
| PPS-3 | Prepared in Preparation Example 3 (MV: 680 poises), End group of the main chain: OH |
| PPS-4 | Prepared in Preparation Example 4 (MV: 600 poises), End group of the main chain: non-substituted |
| PPS-5 (solution polymerization) | Manufacturer: Solvay, Product Name: PR-26, Cross type (MV: 500-1000 poises) |
| Calcium carbonate-1 | Manufacturer: OMYA, Product Name: 1T, Average particle diameter: 1.5 µm, Surface treatment: No |
| Calcium carbonate-2 | Manufacturer: OMYA, Product Name: 1T, Average particle diameter: 1.5 µm, Surface treatment: Yes (treated with calcium stearate) |
| Calcium carbonate-3 | Manufacturer: OMYA, Product Name: 1T, Average particle diameter: 6 µm, Surface treatment: No |
| Glass beads | Average particle diameter: 40 µm, Mohs' hardness: 5.5, E-glass bead, Surface treated with epoxy silane |
| Glass fibers | Manufacturer: Owens Corning, Product Name: FT-562, Diameter: 10 µm, Length: 4 mm, Epoxy sizing |
| Phenoxy resin | Manufacturer: Kukdo Chemical, Product Name: YP-50, Weight average molecular weight: 50,000-70,000 |
| Hydrotalcite | Manufacturer: Kyowa Chemical, Product Name: DHT-4A, Average Diameter: 0.5 µm |

**Table 2**

| Item (unit % by weight) | Example | | | | | | |
|---|---|---|---|---|---|---|---|
| | 1 | 2 | 3 | 4 | 5 | 6 | 7 |
| PPS-1 | 36.5 | - | - | 36.5 | 36.5 | 36.5 | 34.5 |
| PPS-2 | - | 36.5 | - | - | - | - | - |
| PPS-3 | - | - | 36.5 | - | - | - | - |
| PPS-4 | - | - | - | - | - | - | - |
| PPS-5 (solution polymerization) | - | - | - | - | - | - | - |
| Calcium carbonate-1 | 30 | 30 | 30 | 35 | - | 20 | 20 |
| Calcium carbonate- 2 | - | - | - | - | 30 | - | - |
| Calcium carbonate- 3 | - | - | - | - | - | 10 | 10 |
| Glass beads | 10 | 10 | 10 | 5 | 10 | 10 | 10 |
| Glass fibers | 20 | 20 | 20 | 20 | 20 | 20 | 20 |
| Phenoxy resin | 3 | 3 | 3 | 3 | 3 | 3 | 5 |
| Hydrotalcite | 0.5 | 0.5 | 0.5 | 0.5 | 0.5 | 0.5 | 0.5 |

**Table 3**

| Item (unit % by weight) | Comparative Example | | | | |
|---|---|---|---|---|---|
| | 1 | 2 | 3 | 4 | 5 |
| PPS-1 | - | - | 39.5 | 37.0 | - |
| PPS-2 | - | - | - | - | - |
| PPS-3 | - | - | - | - | - |
| PPS-4 | 36.5 | 36.5 | - | - | - |
| PPS-5 (solution polymerization) | - | - | - | - | 36.5 |
| Calcium carbonate-1 | 30 | 20 | 30 | 30 | 30 |
| Calcium carbonate-2 | - | - | - | - | - |
| Calcium carbonate-3 | - | - | - | - | - |
| Glass beads-1 | 10 | 20 | 10 | 10 | 10 |
| Glass fibers | 20 | 20 | 20 | 20 | 20 |
| Phenoxy resin | 3 | 3 | - | 3 | 3 |
| Hydrotalcite | 0.5 | 0.5 | 0.5 | - | 0.5 |

### Experimental Example

The properties of the PPS resin compositions prepared in Examples and Comparative Examples were measured according to the following conditions. Firstly, the PPS resin compositions prepared in Examples and Comparative Examples were respectively injection-molded in an 80-ton Engel injection molding machine at the injection rate of 50 mm/s, injection pressure of 120 MPa and injection temperature of 310°C to manufacture injection samples.

### (1) Tensile strength

Tensile strength of the injection molded specimen was measured according to ISO 527 method.

### (2) Heat Deflection Temperature (HDT)

HDT of injection-molded samples was measured by using the load of 1.82 MPa according to ISO 75-1 and 75-2/A standards.

### (3) Surface Roughness

Surface roughness of injection-molded samples was measured by using a surface analyzer (made by Nano System, Model: NV-1800). The average roughness (Ra) was calculated by analyzing the surface roughness in the same portions of flat samples having the size of 40×70×2 (mm).

### (4) Haze

Haze of injection-molded samples was measured by using a Haze meter (made by Nippon Denshoku, Model: NDH 7000) after putting the injection-molded sample in a vacuum vial, placing a glass plate on an opening of the vacuum vial, and leaving the resulting vacuum vial in an oven of 250°C for 90 hours. The unit of haze is %.

### (5) Aluminum deposition

Aluminum was deposited on injection-molded samples (width: 40 mm, length: 70 mm, and thickness: 2 mm) by using a UV-curable paint, e.g., UP5403©R (product made by KCC) and an aluminum-containing paint composition in a condition of IR-100°C for 5 minutes (using a hot air blowing oven), and UV-3000 mJ/180 mW. The metal deposition of the injection-molded samples with aluminum deposited thereon was evaluated according to ASTM D3359.

### (6) Moisture absorption rate

After the injection-molded samples were left at 230°C for 30 minutes, the moisture absorption rate of the injection-molded samples was measured by using a Karl Fisher Moisture Meter, qualification limit: 100 ppm).

The measurement results of the properties are shown in Table 4.

**Table 4**

| Item | | Tensile strength (kgf/cm²) | HDT (°C) | Surface Roughness (µm) | Haze (%) | Metal Deposition | Moisture Absorption Rate (ppm) |
|---|---|---|---|---|---|---|---|
| Example | 1 | 1230 | 267 | 63 | 0.5 | 5B | 200 |
| | 2 | 1190 | 267 | 67 | 0.6 | 5B | 200 |
| | 3 | 1200 | 267 | 65 | 0.6 | 5B | 200 |
| | 4 | 1150 | 265 | 69 | 0.6 | 5B | 230 |
| | 5 | 1140 | 265 | 61 | 0.7 | 5B | 160 |
| | 6 | 1210 | 267 | 72 | 0.6 | 5B | 210 |
| | 7 | 1120 | 265 | 76 | 0.8 | 5B | 250 |
| Comparative Example | 1 | 1200 | 267 | 68 | 0.6 | 4B | 200 |
| | 2 | 1270 | 269 | 154 | 1.9 | 4B | 400 |
| | 3 | 1260 | 268 | 75 | 0.7 | 3B | 300 |
| | 4 | 1240 | 267 | 83 | 4.7 | 5B | 800 |
| | 5 | 1250 | 268 | 108 | 3.5 | 5B | 500 |

As shown in Table 4, the metal deposition was better in Examples 1 to 3 in which the end group of the main chain is substituted than in Comparative Example 1 including PPS in which the end group of the main chain is not substituted. Also, Examples 1 to 3 were higher in metal deposition and lower in moisture absorption rate than Comparative Example 3 which does not contain a phenoxy resin. Further, Examples 1 to 3 have the haze of 1.0 or less which is remarkably lower than that of Comparative Example 4 which does not contain hydrotalcite. Furthermore, Examples 1 to 3 have remarkably lower haze and surface roughness than Comparative Example 5 which contains polyphenylene sulfide prepared by a solution polymerization method.

Accordingly, since the resin composition according to the present invention is good in surface roughness, haze and metal deposition, the resin composition is suitable as a material for a lamp reflector, is applicable to an LED lighting field and various electric and electronic product fields that are application fields of the lamp reflector and may be widely used in various fields requiring high metal adhesion.

## Claims

1. A resin composition for a lamp reflector comprising: a polyarylene sulfide; a phenoxy resin including repeating units represented by Formula 1; glass beads; a filler; and a hydrotalcite,
wherein the polyarylene sulfide has substituent group selected from carboxyl group, amine group, hydroxyl group and any combination thereof at an end of the main chain:

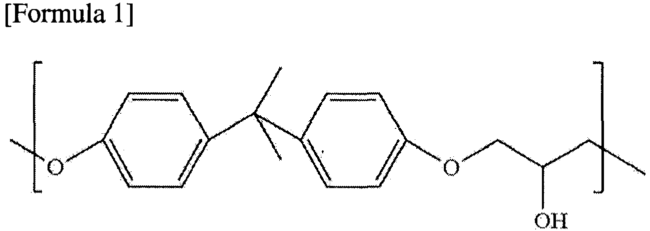

2. The resin composition according to claim 1, wherein the phenoxy resin has a weight average molecular weight of 30,000 to 70,000.

3. The resin composition according to claim 1, wherein the hydrotalcite comprises MgO and Al₂O₃ in a weight ratio of 3.0 to 5.0:1 and has an average particle diameter of 0.3 to 0.8 µm.

4. The resin composition according to claim 1, wherein the glass beads have an average particle diameter of 3 to 50 µm.

5. The resin composition according to claim 1, wherein the polyarylene sulfide has a number average molecular weight of 5,000 to 50,000 and a substituent group selected from carboxyl group, amine group, hydroxyl group and any combination thereof.

6. The resin composition according to claim 1, wherein the polyarylene sulfide comprises iodine bonded to the main chain thereof or free iodine, and the content of the iodine bonded to the main chain and the free iodine is 10 to 10,000 ppm.

7. The resin composition according to claim 1, wherein the filler is selected from calcium carbonate, glass fiber, glass flake, carbon fiber, wollastonite, whisker, milled glass, mica, barium sulfate, talc, silica, and any combination thereof.

8. The resin composition according to claim 7, wherein the filler is selected from calcium carbonate, glass fiber and any combination thereof.

9. The resin composition according to claim 7, wherein the calcium carbonate has an average diameter (D50) of 0.5 to 10 µm.

10. The resin composition according to claim 7, wherein the calcium carbonate comprises fine particulate calcium carbonate having an average particle diameter of 0.5 to 3.0 µm in an amount of 10 to 40% by weight and small particulate calcium carbonate having an average particle diameter of greater than 3.0 µm and up to 10 µm in an amount of 0 to 10% by weight, based on the total weight of the resin composition.

11. The resin composition according to claim 7, wherein the calcium carbonate is included in an amount of 10 to 50% by weight, based on the total weight of the resin composition.

12. The resin composition according to claim 7, wherein the glass fiber has an average diameter of 6 to 15 µm and an average length of 2 to 5 mm, and consists of alumino-borosilicate glass containing alkali oxide.

13. The resin composition according to claim 7, wherein the glass fiber is included in an amount of 5 to 30% by weight, based on the total weight of the resin composition.

14. The resin composition according to claim 1, wherein the resin composition comprises 20 to 60% by weight of polyarylene sulfide, 0.5 to 10% by weight of phenoxy resin, 0.5 to 15% by weight of glass beads, 40 to 70% by weight of filler, and 0.05 to 2.0% by weight of hydrotalcite, based on the total weight of the resin composition.

15. The resin composition according to claim 1, wherein the resin composition has metal adhesion of 5B or more as measured according to ASTM D 3359 method after deposition of aluminum.

16. A lamp reflector manufactured by molding the resin composition according to any of claims 1 to 15.
